# EUROPÄISCHE PATENTANMELDUNG

(11) **EP 0 995 620 A2**
(43) Veröffentlichungstag der Anmeldung: **26.04.2000**
(21) Anmeldenummer: 99118423.5
(22) Anmeldetag: 17.09.1999
(51) Int. Cl.: B60H 1/24

(54) **Verfahren zur Innenraumentlüftung beim Schliessen eines Fahrzeugs**

(30) Priorität: 20.10.1998 DE 19848167
(71) Anmelder: Bayerische Motoren Werke Aktiengesellschaft, 80809 München (DE)
(72) Erfinder: Heil, Michael, 85570 Markt Schwaben (DE)

(57) **Zusammenfassung**

Die Erfindung betrifft ein Verfahren zur Innenraumentlüftung beim Schließen eines Fahrzeugs.

Bekannt ist es, ein Fenster einer Fahrzeugtür mittels eines von einer Steuerung beaufschlagten Antriebsmotors vor dem Öffnen einer Fahrzeugtür abzusenken und nach dem Schließen der Fahrzeugtür wieder hochzufahren. Diese Maßnahme dient beispielsweise einer optimalen Dichtung eines rahmenlosen Fensters.

Um eine ausreichende Innenraumentlüftung beim Schließen eines Fahrzeugs sicherzustellen, wird vorgeschlagen, zumindest ein einziges Fensters beim oder nach dem Öffnen einer oder mehrerer Fahrzeugtüren abzusenken und dieses Fenster erst nach dem Schließen der letzten offenen Fahrzeugtür wieder zu schließen.

## Beschreibung

Die Erfindung betrifft ein Verfahren zur Innenraumentlüftung beim Schließen eines Fahrzeugs gemäß dem Oberbegriff des Anspruchs 1.

Alle geschlossenen Fahrzeuge besitzen normalerweise eine Zwangsentlüftung zur Entlüftung des Innenraums. Bei vielen Fahrzeugen liegt diese Entlüftung im Heckbereich, beispielsweise auf Stoßfängerhöhe, und schafft eine Strömungsverbindung nach außen. Die Querschnitte dieser Strömungsverbindung sind jedoch mit der Zeit immer kleiner geworden. Gleichzeitig wurden die Fahrzeuge dichter. Im Innenraum wird daher beim Schließen einer letzten offenen Fahrzeugtür ein immer höherer Druck aufgebaut. Dabei kann der Innenraumdruck derart stark ansteigen, daß die Tür nur mit einem erhöhten Kraftaufwand geschlossen werden kann. Teilweise sind die Türen nicht vollständig geschlossen, sondern bleiben in einer ersten Raste hängen. Sie müssen dann nochmals geöffnet und erneut geschlossen werden.

Aus der DE 33 01 171 A ist eine Vorrichtung für ein Fahrzeug bekannt, bei der ein Fahrzeugfenster einer Fahrzeugtür vor oder beim Öffnen derselben geringfügig abgesenkt wird. Nach dem Schließen dieser Tür wird das Fahrzeugfenster wieder in die Geschlossenstellung verfahren. Diese Maßnahmen wird zur Verbesserung der Abdichtung bei rahmenlosen Fenstern durchgeführt, wobei erst nach dem Schließen einer Tür das Fenster in einer besonderen Stellung gegen die Fahrzeugdichtung angepreßt wird.

Aus der DE 197 57 363 ist ein Verfahren zum Öffnen eines Fensters bei der Aktivierung eines Airbags bekannt, so daß ein plötzlicher Luftanstieg vermieden werden kann.

Aufgabe der Erfindung ist es, ein Verfahren zur Innenraumentlüftung beim normalen Schließen eines Fahrzeugs anzugeben.

Diese Aufgabe wird durch die im Anspruch 1 genannten Merkmale gelöst.

Ein erfindungswesentliches Merkmal ist, daß zumindest ein Fenster einer Fahrzeugtür beim Schließen der letzten offenen Fahrzeugtür abgesenkt ist. Insbesondere erfolgt das Absenken des Fensters beim oder nach einem Öffnungsvorgang der Fahrzeugtür. Insgesamt wird mit der vorliegenden Erfindung der Öffnungsquerschnitt für die auszuströmende Luft vor dem Schließen der letzten Fahrzeugtür vergrößert, ohne daß dieses Fenster einer bestimmten Tür zugeordnet werden muß.

Beispielsweise kann ein Fenster abgesenkt werden, welches einer anderen als der zu betätigenden Tür zugeordnet ist. Alternativ kann auch immer ein bestimmtes Fenster, beispielsweise dasjenige der Fahrertür, abgesenkt werden.

Wichtig ist auch die Absenkung eines Fensters um einen solchen Betrag, daß der Strömungsquerschnitt aus dem Innenraum an die Umgebung signifikant erhöht wird. Eine Absenkung eines Fensters in einem Maße, in dem der entstehende Schlitz von einer Fahrzeugdichtung noch überdeckt wird, ist gerade nicht ausreichend. Vorzugsweise erfolgt eine Absenkung im Bereich von 3 bis 7 cm, insbesondere 5 cm.

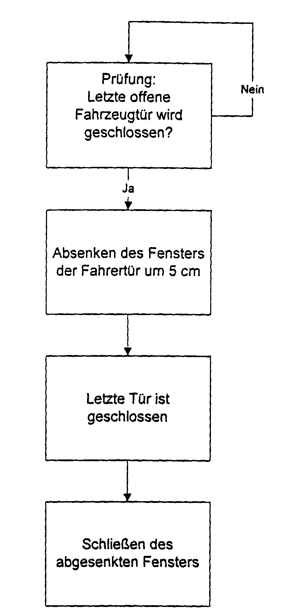

Nachfolgend wird eine Ausführungsform eines erfindungsgemäßen Verfahrens anhand der einzigen Zeichnung dargestellt.

Voraussetzung ist, daß das abzusenkende Fahrzeugfenster von einer Antriebseinheit abgesenkt bzw. angehoben werden kann, welche wiederum von einer Steuerung beaufschlagt ist. Die Steuerung verarbeitet verschiedene Eingangssignale, beispielsweise dasjenige von den Türschließschaltern.

Beim erfindungsgemäßen Verfahren wird zunächst geprüft, ob die letzte offene Fahrzeugtür geschlossen werden soll. Ist dies nicht der Fall, so wird zurückverzweigt.

Ist dies jedoch der Fall, so wird ein Absenken des Fensters der Fahrertür um 5 cm durchgeführt. Sodann wird geprüft, ob die letzte Tür geschlossen ist. Ist dies der Fall, wird das abgesenkte Fenster wieder geschlossen.

Durch das Absenken des Fensters entsteht ein vergrößerter Strömungsquerschnitt, so daß Luft aus dem Innenraum an die Umgebung während des Schließvorganges der letzten offenen Fahrzeugtür an die Umgebung entweichen kann. Dadurch baut sich kein erhöhter Innenraumdruck auf so daß weder ein erhöhter Kraftaufwand zum Schließen der Fahrzeugtür erforderlich ist, noch die Gefahr besteht, daß die Fahrzeugtür nicht vollständig geschlossen ist. Insgesamt erhöht sich der Bedienkomfort für den Fahrzeugbenutzer. Die Erfindung führt auch zu einer geringeren Geräuschentwicklung, da kein so starkes und damit lautes Türzuschlagen mehr notwendig ist, auch werden die Bauteile der Tür weniger belastet. Ferner haben alle Türen die gleiche Bedienhaptik. Von Vorteil ist auch, daß keine weiteren Hardwarekosten entstehen, da alle erforderlichen Steuergeräte, Sensoren und Aktuatoren meist im Fahrzeug vorhanden sind.

## Patentansprüche

1. Verfahren zur Innenraumentlüftung beim Schließen eines Fahrzeugs bei der ein Fenster einer Fahrzeugtür mittels eines von einer Steuerung beaufschlagten Antriebsmotors öffen- und schließbar ist, wobei das Fenster bei der Offenstellung einer Tür zumindest geringfügig abgesenkt ist und nach dem Schließen der Tür geschlossen wird,
dadurch gekennzeichnet,
daß das Absenken zumindest eines einzigen Fensters beim oder nach dem Öffnen einer oder mehrerer Fahrzeugtüren durchgeführt wird und daß das Schließen desselben erst nach dem Schließen der letzten offenen Fahrzeugtür erfolgt.

2. Verfahren nach Anspruch 1,
dadurch gekennzeichnet,
daß die Absenkung des Fensters vor dem Schließen einer letzten offenen Fahrzeugtür erfolgt.

3. Verfahren nach Anspruch 1 oder 2,
dadurch gekennzeichnet,
daß das abzusenkende oder abgesenkte Fenster nicht zwangsweise einer betätigten Tür zugeordnet ist.

4. Verfahren nach Anspruch 1 oder 2,
dadurch gekennzeichnet,
daß unabhängig von der betätigten Fahrzeugtür ein bestimmtes Fenster abgesenkt wird.
